# EUROPÄISCHE PATENTSCHRIFT

(11) **EP 3 878 197 B1**
(45) Veröffentlichungstag und Bekanntmachung des Hinweises auf die Patenterteilung: **31.12.2025**
(21) Anmeldenummer: 19801301.3
(22) Anmeldetag: 07.11.2019
(51) Int. Cl.: H04W 12/08, G06F 21/60, G06F 21/62, H04W 12/06, G06F 21/31, G06F 21/44, H04L 9/40

(54) **KONTROLLE VON ZUGRIFFSRECHTEN IN EINEM VERNETZTEN SYSTEM MIT DATENVERARBEITUNG**
CONTROLLING ACCESS RIGHTS IN A NETWORKED SYSTEM WITH DATA PROCESSING
CONTRÔLE DE DROITS D'ACCÈS DANS UN SYSTÈME EN RÉSEAU AVEC TRAITEMENT DE DONNÉES

(30) Priorität: 08.11.2018 DE 102018127949
(43) Veröffentlichungstag der Anmeldung: 15.09.2021
(73) Patentinhaber: Samson Aktiengesellschaft, 60314 Frankfurt am Main (DE)
(72) Erfinder: SCHÖBEL, Michael, 12169 Berlin (DE); MOJZIS, Martin, 12163 Berlin (DE)
(74) Vertreter: noventive Patentanwaltsgesellschaft mbH
(86) Internationale Anmeldenummer: PCT/EP2019/080564
(87) Internationale Veröffentlichungsnummer: WO 2020/094798

(56) Entgegenhaltungen:
- WO-A1-2017/095741
- DE-A1- 102004 004 101
- US-A1- 2018 204 022

## Beschreibung

### Gebiet der Erfindung

Die Erfindung betrifft die Verwaltung von Berechtigungen bzw. Zugriffsrechten in einem vernetzten System mit Datenverarbeitung.

Vernetzte Systeme mit Datenverarbeitung umfassen eine Vielzahl verschiedener Systeme wie z.B. verteilte Computersysteme, verfahrenstechnische Anlagen oder Versorgungssysteme für Fernwärme oder Erdgas. Entsprechend vielfältig sind auch die Objekte, die zu diesen Systemen gehören können. Beispiele sind Hard- und Softwarekomponenten, Peripheriegeräte oder externe Geräte, aber auch Anwendungsprogramme, Dienste, Datenobjekte wie Dateien oder Aufzeichnungen und Netzwerkkomponenten. Die Objekte stehen Nutzern eines vernetzten Systems in vielfältiger Weise zur Verfügung, z.B. zur Steuerung von Geräten oder Anlagen, die an das System angeschlossen sind, oder zur Abfrage von Informationen und Aufzeichnungen, die auf einem Datenträger des Systems gespeichert sind.

Eine Steuerung etabliert und überwacht die Kommunikation zwischen den Nutzern und den Objekten des Systems. Sie übernimmt auch die Verwaltung von Zugriffsrechten, d.h. die Zuweisung und die Kontrolle von Rechten oder Berechtigungen, die angeben, ob und wie ein Nutzer auf ein Objekt zugreifen kann.

Die Kontrolle von Zugriffsrechten ist für viele Anwendungsbereiche relevant. Ein Beispiel stellt die Verwaltung von Dateien auf einem Personal-Computer (PC) dar, oder innerhalb einer Client-Server-Architektur, bei der i.d.R. einer Mehrzahl von Benutzern unterschiedliche Lese- und Schreibrechte zur Verfügung stehen. Der Aufwand für diese Art der Zugriffskontrolle steigt sowohl mit der Anzahl als auch der Art der Benutzer. Ähnliches gilt für die Zugriffsrechte und die Objekte im Zusammenhang mit dem *Internet der Dinge* (loT, *Internet of Things)* bzw. smarten Produktionsanlagen im Rahmen einer *Industrie 4.0.* Dabei werden physische sowie virtuelle Objekte über öffentliche Netzwerke wie das Internet oder nicht-öffentliche Netzwerke wie ein firmeninternes Intranet überwacht und gesteuert. Dies ermöglicht z.B. eine vorausschauende Wartung *(predictive maintenance)* oder die Optimierung von Lieferketten. Die Gegenstände oder Objekte können darüber hinaus miteinander vernetzt werden, so dass sie autonom Aktionen durchführen und zusammenarbeiten können.

Dementsprechend kann ein unerwünschter oder unvorhergesehener Zugriff eines Nutzers auf Objekte - je nach Typ und Einsatzgebiet - zu verschiedenen gefährlichen Szenarien führen. Das ist insbesondere im loT-Umfeld von Bedeutung, wenn es um den Zugriff auf mehrere tausend Geräte geht, z.B. zur Steuerung von Versorgungssystemen für Fernwärme-, Trinkwasser-, Erdgas- oder Strom.

### Stand der Technik

In der Regel wird für die Verwaltung von Zugriffsrechten in einem vernetzten System mit Datenverarbeitung ein hierarchischer Ansatz gewählt:
- Es existiert eine hierarchische Organisationsstruktur der Objekte (z.B. ein Verzeichnisbaum).
- Es existieren Nutzer und Nutzergruppen.
- Es existieren Arten von Berechtigungen bzw. Zugriffsrechten zum Zugriff auf die Objekte (Lesen, Schreiben, etc.).

Ein zentraler Administrator hat dabei die Aufgabe, den Nutzern (bzw. Nutzergruppen) Zugriffsberechtigungen auf die Geräte in der hierarchischen Struktur zuzuweisen. Zwei bekannte Möglichkeiten einer derartigen Zuordnung sind dabei rwx-Bits (Unix-Welt) oder Access-Control-Lists (Windows Welt):
- Unix-Welt: Jedes Objekt wird genau einem Besitzer und genau einer Nutzergruppe zugeordnet. Die Zugriffsberechtigungen - z.B. lesen (r), schreiben (w) und ausführen (x) - können dann für den Besitzer, die Gruppenmitglieder und "Alle Anderen" definiert werden.
- Windows-Welt: Mit jedem Objekt wird eine Liste von Access-Control-Einträgen verknüpft. Jeder Eintrag prüft basierend auf Nutzername oder Gruppenzugehörigkeit, ob der Zugriff gestattet ist oder nicht.

Für den loT-Anwendungsfall haben die bekannten Verfahren die folgenden Nachteile:
- Die Organisation von Geräten in einer streng hierarchischen Organisations- oder Baumstruktur ist unter Umständen nicht möglich - ein bestimmtes Gerät (z.B. ein Temperatursensor) kann in unterschiedlichen Kontexten verwendet werden.
- Die Verwaltung der Zuordnungen wird schnell unübersichtlich und fehleranfällig. Beispiel: Die Geräte in einem bestimmten Wohngebiet dürfen von Mitarbeitern der Wohnungsbaugesellschaft X eingesehen werden. Eine Teilmenge davon darf Hausmeister Y auch sehen. Eine andere Teilmenge davon darf Mieter Z sehen. Ändert sich jetzt etwas an den Zuständigkeiten von Y oder für die von Z gemieteten Räumlichkeiten müssen gegebenenfalls Anpassungen an der Gerätehierarchie, den Gruppenzugehörigkeiten und/oder den Berechtigungen vorgenommen werden.
- In komplexeren Situationen ist es unter Umständen nicht offensichtlich, welche Auswirkungen Änderungen an der Gerätehierarchie oder Gruppenzugehörigkeit haben.
- Zeitlich begrenzte Freigaben von Geräten (zum Beispiel bis zur Behebung eines bestimmten Problems) sind meistens nur durch Terminerinnerungen beim Administrator realisierbar.

Um eine große Zahl von Nutzern und Nutzergruppen zu verwalten, wird oft mit einer weiteren Hierarchieebene gearbeitet, in der verschiedene Gruppenzugehörigkeiten zu sogenannten Rollen zusammengefasst werden. Dieser Ansatz der rollenbasierten Zugriffskontrolle basiert jedoch weiterhin auf einer streng hierarchischen Struktur mit den zuvor genannten Problemen.

Eine weitere Herausforderung stellt die Zugriffskontrolle in einem heterogenen Umfeld dar, das z.B. verschiedene Betriebs- oder Datenbanksysteme umfasst. Hierzu wird z.B. in US 2013/0332984 A1 ein Verfahren beschrieben, das die Zugriffskontrolle auf Mechanismen reduziert, die in allen Umgebungen vorhanden sind und verwendet werden können. Das Verfahren basiert jedoch weiterhin auf einem hierarchischen Ansatz, insbesondere einer rollenbasierten Zugriffskontrolle.

Viele Prozesse werden mithilfe von Datenobjekten überwacht und gesteuert, die laufend aktualisiert werden. Dazu gehören Log- bzw. Protokolldateien, die zur Überwachung und Steuerung von Computersystemen, Liefer- bzw. Produktionsketten oder Geschäftsprozessen eingesetzt werden. Zu diesem Zweck werden - z.B. in vorgegebenen Zeitintervallen oder bei vorgegebenen Zustandsänderungen - Datenelemente erzeugt und in den Datenobjekten abgespeichert. Die Objekte werden oft von einer Vielzahl von Benutzern mit unterschiedlichen Zugriffsrechten überwacht, ausgewertet und/oder bearbeitet. Die Offenlegungsschrift US 2013/0332984 A1 gibt für diesen Fall ein Verfahren an, mit dem die einzelnen Elemente der Datenobjekte zum Zeitpunkt ihrer Entstehung bzw. Speicherung ihrem Inhalt entsprechend mit Zugriffsrechten ausgestattet werden. Auf diese Weise kann jeder Nutzer auf die Teile des Datenobjekts zugreifen, die für ihn relevant sind. Die dynamische Zuweisung der Zugriffsrechte erfolgt jedoch wiederum mithilfe einer rollenbasierten Zugriffskontrolle.

In ähnlicher Weise kann gemäß der US 2018/204022 A1 der Inhalt eines Datenobjekts analysiert und auf diese Weise bestimmten Nutzern Zugriff auf die Daten gewährt oder verweigert werden. Gemäß der DE 10 2004 004 101 A1 kann auf diese Weise auch eine Datenobjektkennung erstellt und zur Zugriffskontrolle genutzt werden. Der Aufwand für eine derartige Zugriffskontrolle wächst jedoch mit der Größe und Anzahl der Datenobjekte.

WO 2004/001555 A2 beschreibt ebenfalls einen rollenbasierten Ansatz der Zugriffskontrolle, um die Leistung der Komponenten eines verteilten Computersystems, insbesondere von Anwendungsprogrammen, abzufragen und nach Bedarf zu steuern.

Rollenbasierte Ansätze der Zugriffskontrolle sind nicht auf natürliche Personen oder Personengruppen beschränkt, wie z.B. Administratoren, Sekretärinnen oder Geschäftsführer. Wie in US 2012/0137213 A1 beschrieben können Rollen auch für Anwendungsprogramme definiert bzw. Rollen von natürlichen Personen oder Personengruppen auf Anwendungsprogramme übertragen oder vererbt werden. Anwendungsprogramme können damit mit denselben Zugriffsrechten ausgestattet werden wie natürliche Personen oder Personengruppen.

Das letzte Beispiel zeigt, dass sich die Rolle oder Gruppenzugehörigkeit eines Nutzers sehr schnell ändern kann, insbesondere wenn es sich um ein Anwendungsprogramm handelt, das seine Rolle oder Gruppenzugehörigkeit von einer Mehrzahl von Benutzern vererbt bekommt. Dieser Problematik wird in WO 2012/151132 A1 mit einem Verfahren begegnet, das eine Gruppierung von Nutzern ermöglicht, die entsprechende Änderungen schnell, d.h. in "Echtzeit", aufnimmt und durchsetzt. Wie in US 2008/0127354 A1 beschrieben, kann ein solches Verfahren auch durch Zeit- oder Ortsangaben ergänzt werden.

Erweiterungen einer rollen- bzw. gruppenbasierten Zugriffskontrolle gehören ebenfalls zum Stand der Technik. US 8,032,558 B2 beschreibt zum Beispiel ein Verfahren, bei dem eine rollenbasierte Zugriffskontrolle um Richtlinien ergänzt wird, die bestimmten Knotenpunkten - sogenannten *policy enforcement points* - zugeordnet sind. In ähnlicher Weise werden in dem Verfahren, das in WO 02/097591 A2 vorgestellt wird, die Zugriffsrechte einer Rolle mithilfe von Tickets (Tokens) und/oder Zertifikaten gesteuert. Sie können zu einem beliebigen Zeitpunkt an eine Rolle vergeben werden oder der Rolle wieder entzogen werden.

In ähnlicher Weise wird in der Patentschrift US 8,458,337 B2 eine Erweiterung einer rollenbasierten Zugriffskontrolle beschrieben, bei der nicht die Rollen sondern die Nutzer mit zusätzlichen Rechten oder Merkmalen ausgestattet werden, so dass sie unterschiedliche Zugriffsrechte auf die Objekte erwerben können, obwohl sie dieselbe Rolle innehaben.

In den Schriften US 2011/167479 A1 und WO 2015/047338 A1 werden Verfahren beschrieben, bei denen diese Art von Merkmalen aus dem Zusammenhang, in dem ein Zugriffsrecht von einem Nutzer angefragt wird, bzw. dem Verhalten eines Nutzers gewonnen werden.

Die Verfahren in den zuvor genannten Schriften nutzen allesamt die Zugehörigkeit der Nutzer zu einer Gruppe bzw. Rolle zur Verwaltung von Zugriffsrechten.

Ein etwas anderer Ansatz findet sich in der WO 2013/048154 A2 oder der WO 2017/095741 A1. Er besteht darin, die Objekte in logische Gruppen zusammenzufassen. Gemäß der WO 2017/095741 A1 erfolgt die Gruppierung anhand von Markierungen bzw. Tags der Objekte, die von einem Administrator vorgegeben werden. Gemäß der WO 2013/048154 A2 erfolgt die Bildung der Objektgruppen anhand statischer Kriterien. Dies führt zu ähnlichen Nachteilen wie die zuvor beschriebene hierarchische Organisation der Objekte:
- Die Organisation von Geräten in logischen Gruppen ist unter Umständen nicht möglich oder nicht erwünscht.
- Die Verwaltung der Zuordnungen wird schnell unübersichtlich und fehleranfällig.
- In komplexeren Situationen ist es unter Umständen nicht offensichtlich, welche Auswirkungen Änderungen an der Gruppenzugehörigkeit haben.
- Zeitlich begrenzte Freigaben von Geräten (zum Beispiel bis zur Behebung eines bestimmten Problems) sind meistens nur durch Terminerinnerungen beim Administrator realisierbar.

### Aufgabe

Aufgabe der Erfindung ist es, ein Verfahren anzugeben, das die Verwaltung von Zugriffsrechten in einem vernetzten System mit Datenverarbeitung vereinfacht, v.a. flexibler und sicherer gestaltet.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zur Kontrolle von Zugriffsrechten von mindestens einem Nutzer auf Objekte in einem vernetzten System mit Datenverarbeitung vorgeschlagen, wobei die Kontrolle der Zugriffsrechte rechnergestützt erfolgt. Dabei wird dem mindestens einen Nutzer mindestens ein Zugriffsrecht auf mindestens eines der Objekte gewährt oder verweigert, wobei die Objekte in mindestens eine Objektgruppe unterteilt werden und die Zugehörigkeit der Objekte zu der mindestens einen Objektgruppe genutzt wird, um zu entscheiden, ob dem mindestens einen Nutzer das mindestens eine Zugriffsrecht auf mindestens eines der Objekte gewährt oder verweigert wird. Die Unterteilung oder Gruppierung der Objekte in die mindestens eine Objektgruppe erfolgt mithilfe mindestens einer Regel, wobei die mindestens eine Regel eine logische Abfrage darstellt, die von dem vernetzten System mit Datenverarbeitung zur Unterteilung der Objekte in Gruppen genutzt wird. Die mindestens eine Regel bezieht sich dabei auf mindestens eine Eigenschaft der Objekte, wobei die für die Gruppierung genutzte mindestens eine Eigenschaft der Objekte eine zeitlich veränderliche Eigenschaft darstellt. Dabei kann ein Objekt in mehr als einer Gruppe, in einer einzelnen Gruppe oder in keiner Gruppe vertreten sein.

Als zeitlich veränderliche, dynamische Eigenschaften der Objekte, die zur Gruppierung herangezogen werden, kommen u.a. die folgenden Eigenschaften in Frage:
- Die Temperatur, der Druck oder ähnliche physikalische Eigenschaften von Teilen der Objekte;
- die Dauer der bereits erfolgten Nutzung;
- meteorologische, momentane Umstände am Ort des Objekts;
- eine Historie der genannten Werte;
- die momentanen Zugriffe oder eine Historie davon;
- Füllstände oder ähnliches von Komponenten der Objekte, etwa verbleibender Gasdruck, Tankinhalt oder Papier- oder Tintenstände;
- Zählerstände;
- Angaben zum Grad des Verschleißes;
- etc.
Die Liste kann beliebig fortgesetzt werden.

Die Grundidee dieses Lösungsansatzes ist, den streng hierarchischen Ansatz zur Unterteilung der Objekte aufzulösen und durch eine Unterteilung nach mindestens einer Eigenschaft oder einer Reihe von Eigenschaften der Objekte zu ersetzen. Dabei kommen drei zentrale Aspekte bzw. Konzepte zum Einsatz:
- Zugriffsrecht - Was darf ein Nutzer mit einem freigegebenen Objekt machen?
- Nutzer - Wer darf auf die Objekte zugreifen?
- (Dynamische) Objektgruppe - Auf welche Objekte darf zugegriffen werden?
Objekte mit definierten Eigenschaften werden in einer Objektgruppe zusammengefasst, einer dynamischen Objektgruppe, wenn mindestens eine der Eigenschaften, die zur Gruppenbildung herangezogen wird, zeitlich veränderlich ist. Dabei werden die Mitglieder einer dynamischen Objektgruppe laufend aktualisiert, d.h. die Mitglieder einer dynamischen Objektgruppe werden kontinuierlich neu bestimmt - basierend auf einer Reihe von Regeln bzw. Bedingungen.

Die Regeln können beliebige Boolsche Ausdrücke sein, ebenso wie Fuzzy Logic Entscheidungen und neuronale Netze zur Entscheidung über die Gruppierung.

Das Verfahren bietet mehrere Vorteile:
- Die Verwaltung von Zugriffsrechten wird vereinfacht - insbesondere, wenn eine große Anzahl von Objekten verwaltet werden soll.
- Das Verfahren kann unabhängig von einer hierarchischen Gruppierung der Objekte durchgeführt werden.
- Die dynamische Freigabe über Objekteigenschaften ermöglicht eine feingranulare Zuordnung von Objekten zu Nutzern, die eine bestimmte Aufgabe mithilfe dieser Objekte erledigen müssen. Dies ist mit den bisherigen Mitteln schwer umzusetzen.
- Die Freigabe von definierten Objekten erhöht die Informationssicherheit: nach dem *"need* to know"-Prinzip kann eben nur auf Objekte mit bestimmten Eigenschaften zugegriffen werden - liegen diese Eigenschaften nicht mehr vor, ist auch kein Zugriff mehr möglich.

Das Verfahren kann allgemein für vernetzte Systeme mit Datenverarbeitung genutzt werden, z.B.:
- zur Umsetzung von Technologien des "Internets der Dinge",
- zur Steuerung von Produktionsanlagen und Versorgungssystemen wie z.B. für Fernwärme, Wasser, Erdgas oder Strom,
- zur Prozesssteuerung verfahrenstechnischer Anlagen,
- zur Steuerung oder Nutzerverwaltung in Rechnernetzwerken, Rechenclustern oder Supercomputern,
- zur Wartung oder Überwachung einer Druckerflotte,
- in Telekommunikationsanlagen,
- in virtuellen Anlagen und Systemen und
- in realen Anlagen und Systemen, die mit virtuellen Objekten erweitert werden können.

Der Vielfältigkeit der vernetzten Systeme mit Datenverarbeitung entsprechend können die Objekte z.B. Geräte, Dateien, Datenobjekte, Aufzeichnungen, Dienste, Anwendungsprogramme, Computersysteme, Software- und/oder Hardwarekomponenten darstellen.

Ähnliches gilt für die Nutzer, die einerseits reale Personen sein können, andererseits auch Geräte, Dienste, Anwendungsprogramme, Computersysteme, Software- und/oder Hardwarekomponenten. Ein Anwendungsprogramm kann z.B. Berechtigungen von einem Anwender vererbt bekommen und damit Zugriffsrechte auf Dienste oder andere Objekte ausüben, die den Zugriffsrechten des Anwenders, insbesondere einer natürlichen Person, ähnlich oder sogar gleichwertig sind.

Die Zugriffsrechte oder Berechtigungen können einfache Lese- und/oder Schreibzugriffe sein oder Berechtigungen, um ein Programm auf einem Computersystem oder auf einem dafür geeigneten Subsystem auszuführen, das zu einem der Objekte gehört. Eine Fernsteuerung bzw. *remote control* von steuerbaren Objekten und/oder einen weiterführenden Zugriff über ein erstes Objekt auf ein zweites Objekt ist ebenfalls möglich.

Das Verfahren stützt sich auf Regeln, die z.B. von einem Administrator festgelegt werden können. Eine weitere Variante stellen Regeln dar, die mithilfe datenanalytischer Methoden oder von Simulationen gewonnen werden. Damit können neben dem Ist-Zustand der Objekte auch Erfahrungswerte, statistische Auswertungen oder Prognosen zum Verhalten der Objekte in die Zugriffskontrolle einbezogen werden. Die Kontrolle der Zugriffsrechte kann somit vorausschauend gestaltet werden, z.B. zur Gestaltung von Wartungszyklen, oder mithilfe von digitalen Zwillingen erfolgen, die es ermöglichen, das Verhalten der Objekte im Zeitraffer zu simulieren oder unter verschiedenen Bedingungen bzw. Szenarien zu testen.

Die Regeln zur Vergabe von Zugriffsrechten stellen logische Abfragen dar, z.B. ob ein Messwert innerhalb oder außerhalb eines Intervalls liegt. Die Grenzen solcher Intervalle stellen Schwellwerte dar. Damit können Eigenschaften von Objekten in logische Aussagen (wahr oder unwahr) umgesetzt werden, die z.B. mit einer Mehrzahl diskreter oder kontinuierlicher Werte angegeben werden können. Die Schwellwerte können auch in statistischen Funktionen (min, max, avg, mean, top10, ...) und mit zeitlichem Bezug (heute, gestern, letzter Monat, ...) gewählt werden.

Die Grundidee des Verfahrens beruht auf zeitlich veränderlichen Eigenschaften. Die zugehörigen Regeln können auf einer oder mehrerer dieser Eigenschaften beruhen. Sie können zusätzlich statische bzw. unveränderliche Eigenschaften umfassen, wie z.B. Gerätetyp, Standort oder Besitzer. Für die Gruppierung der Objekte (bzw. Unterteilung der Objekte in Gruppen) kann dann zusätzlich mindestens eine statische Eigenschaft der Objekte genutzt werden. Der Begriff statisch bezieht sich dabei auf Zeitskalen, die typischerweise größer sind als die Zeitskalen für eine Veränderung der zeitlich veränderlichen Eigenschaft(en) der Objekte. Auf diese Weise können die bisherigen hierarchischen Ansätze weiter verwendet werden: Ein Unter- oder Teilbaum einer Objekthierarchie kann als Gruppe repräsentiert werden, die aufgrund einer statischen Eigenschaft gebildet wird.

Zur Gruppierung der Objekte können die Werte der Eigenschaften der Objekte herangezogen werden, die zuletzt von den Objekten des Systems bestimmt und/oder im System gespeichert wurden. Dies ermöglicht eine Aktualisierung der Objektgruppen, die möglichst nahe am Ist-Zustand des Systems liegt. Mit anderen Worten erfolgt die Gruppierung in Echtzeit.

Sollte sich die Gruppierung in Echtzeit als zu schwankend erweisen, kann die Gruppierung der Objekte auch lediglich in einem zeitlich vorgegebenen Abstand überprüft und angepasst werden. Je nach Anwendung und System kann dieser zeitliche Abstand z.B. wenige Mikro- oder Millisekunden, Minuten oder Stunden betragen. Dies ist zum Beispiel für Eigenschaften von Vorteil, die nur mit kontinuierlich veränderlichen oder stark schwankenden Werten beschrieben werden können, da die Gruppierung der Objekte nicht nach jeder Änderung neu bewertet und angepasst werden muss.

Eine weitere Alternative mit ggf. rauschenden dynamischen Eigenschaften umzugehen besteht darin, dass die Gruppierung der Objekte in die mindestens eine Objektgruppe mit einer zeitlichen Dämpfung oder künstlichen Hysterese erfolgt. Dies verhindert ein ungewolltes Hin- und Herspringen eines Objekts zwischen verschiedenen Gruppen.

Verändert sich die mindestens eine zeitlich veränderliche Eigenschaft im Rahmen gewisser nicht-signifikanter Schwankungen nur sehr langsam, ist es besser, die Gruppierung der Objekte anhand dieser Eigenschaft nur dann neu zu bewerten, wenn sich die mindestens eine Eigenschaft des Objekts um einen vorgegebenen Wert verändert hat.

Die Werte, die angeben, ob eine Veränderung als signifikant einzuordnen ist, stellen bevorzugterweise relative bzw. prozentuale Angaben dar. Andernfalls hängt die Gruppierung bzw. Unterteilung der Objekte von schwankenden absoluten Werten ab. Die Zuverlässigkeit der Zugriffskontrolle kann dadurch beeinträchtigt werden, z.B. wenn die Werte sehr klein sind.

Neben der Gruppierung von Objekten kann das Verfahren auch Schritte zur Gruppierung der Nutzer umfassen. Dies ist nur sinnvoll, wenn eine Mehrzahl von Nutzern mindestens ein Zugriffsrecht auf mindestens eines der Objekte benötigt. Die Nutzer werden dann in mindestens eine Nutzergruppe unterteilt, wobei die Unterteilung der Nutzer in die mindestens eine Nutzergruppe mithilfe mindestens einer Regel erfolgt, die sich auf mindestens eine Eigenschaft der Nutzer bezieht. Die Zugehörigkeit der Nutzer zu der mindestens einen Nutzergruppe wird anschließend genutzt, um zu entscheiden, ob den Mitgliedern einer Nutzergruppe das mindestens eine Zugriffsrecht auf mindestens eines der Objekte gewährt oder verweigert wird. Dabei kann ein Nutzer in mehr als einer Nutzergruppe vertreten sein.

Ferner wird die Aufgabe gelöst durch ein Computerprogramm, das bei Ablauf auf einer Recheneinheit, einem Mikrocontroller, DSP, FPGA oder Computer oder auf einer Mehrzahl davon in einem Netzwerk das erfindungsgemäße Verfahren in einer seiner Ausgestaltungen ausführt.

Weiterhin wird die Aufgabe gelöst durch ein Computerprogramm mit Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Schließlich wird die Aufgabe gelöst durch ein moduliertes Datensignal, welches von einer Recheneinheit, einem Mikrocontroller, DSP, FPGA oder Computer oder von einer Mehrzahl davon in einem Netzwerk ausführbare Instruktionen zum Ausführen des erfindungsgemäßen Verfahrens in einer seiner Ausgestaltungen enthält.

Als Computersystem zum Ausführen des Verfahrens kommen sowohl ein *Stand-alone* Computer oder Mikrocontroller, DSPs oder FPGAs in Betracht, als auch ein Netzwerk von Mikrocontrollern, DSPs, FPGAs oder Rechnern, beispielsweise ein hausinternes, geschlossenes Netz, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen. Es umfasst eine Einrichtung, die derart ausgestaltet ist, dass sie das erfindungsgemäße Verfahren ausführen kann.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das erfindungsgemäße Verfahren in einer seiner Ausgestaltungen ausführen kann.

Zur Lösung der Aufgabe wird des Weiteren ein vernetztes System mit Datenverarbeitung vorgeschlagen, in dem mindestens einem Nutzer mindestens ein Zugriffsrecht auf mindestens ein Objekt des vernetzten Systems mit Datenverarbeitung gewährt oder verweigert werden kann. Die Kontrolle des mindestens einen Zugriffsrechts erfolgt dabei mittels einer mit den Objekten gekoppelten Steuerung. Die Steuerung weist Mittel auf, mittels derer die Objekte in mindestens eine Objektgruppe unterteilt werden können. Ferner weist die Steuerung Mittel auf, mittels derer die Zugehörigkeit der Objekte zu der mindestens einen Objektgruppe genutzt werden kann, um zu entscheiden, ob dem mindestens einen Nutzer das mindestens eine Zugriffsrecht auf mindestens eines der Objekte gewährt oder verweigert wird. Schließlich weist die Steuerung auch noch Mittel auf, mittels derer die Unterteilung der Objekte in die mindestens eine Objektgruppe mithilfe mindestens einer Regel erfolgen kann, wobei die mindestens eine Regel eine logische Abfrage darstellt, die von dem vernetzten System mit Datenverarbeitung zur Unterteilung der Objekte in Gruppen genutzt wird. Die mindestens eine Regel bezieht sich dabei auf mindestens eine Eigenschaft der Objekte, wobei die für die Gruppierung genutzte mindestens eine Eigenschaft der Objekte eine zeitlich veränderliche Eigenschaft darstellt.

Ein Computerprogramm, umfassend Befehle, die bewirken, dass die Steuerung die Verfahrensschritte eines erfindungsgemäßen Verfahrens ausführt, löst ebenfalls die Aufgabe.

Die Aufgabe wird ferne gelöst durch einen Datenträger, auf dem das soeben beschriebene Computerprogramm gespeichert ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: ein vernetztes System mit Datenverarbeitung;
- Fig. 2: ein vernetztes System mit Datenverarbeitung, bei dem die Zugriffskontrolle u.a. mithilfe von Simulationsergebnissen und Ergebnissen von Datenanalysen erfolgt; und
- Fig. 3: eine beispielhafte Bildung von Nutzer- und Objektgruppen und die zugehörigen schematischen Zugriffsrechte.

### Figur 1

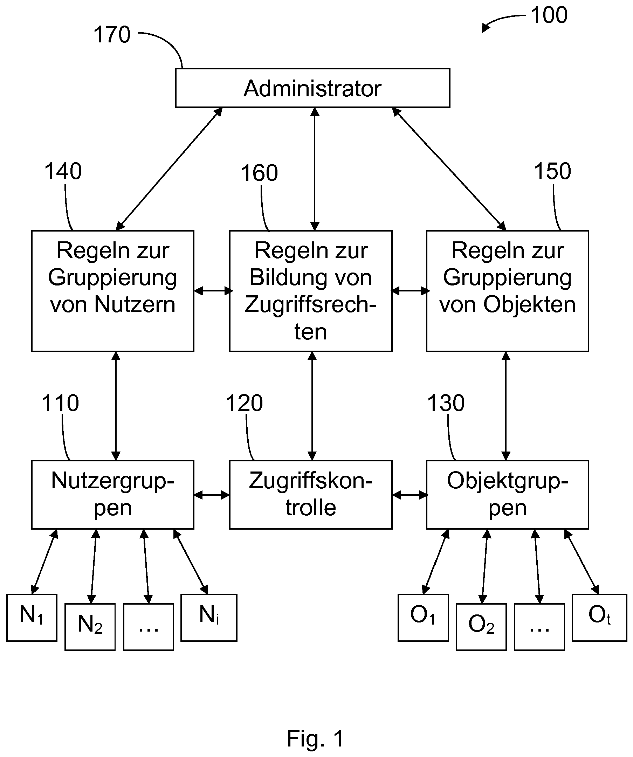

Fig. 1 stellt ein vernetztes System mit Datenverarbeitung 100 dar, bei dem Zugriffsrechte, die von einer Reihe von Nutzern N₁ bis Nᵢ auf eine Reihe von Objekten O₁ bis Oₜ angefordert werden können (wobei n und t natürliche Zahlen sind). Dazu verfügt das System über eine Nutzergruppenverwaltung 110, eine Zugriffsrechteverwaltung 120 und eine Objektgruppenverwaltung 130. Dabei nutzt die Nutzergruppenverwaltung 110 einen Satz von Regeln 140 zur Unterteilung der Nutzer N₁ bis Nᵢ in Gruppen. Ähnliches gilt für die Objektgruppenverwaltung 130, die einen Satz von Regeln 150 zur Unterteilung der Objekte O₁ bis Oₜ in Objektgruppen heranzieht. Zugriffsrechte werden von der Zugriffsrechteverwaltung 120 nach der Zugehörigkeit der Nutzer N₁ bis Nᵢ zu Nutzergruppen und der Objekte O₁ bis Oₜ zu Objektgruppen gewährt oder verweigert, wobei ein Satz von Regeln 160 zur Anwendung gebracht wird. Ein Administrator 170 verwaltet dabei die Regelsätze 140, 150 und 160.

Die Objekte O₁ bis Oₜ werden im System 100 Objektgruppen zugeordnet, die alle auf derselben Organisationsebene stehen, d.h. vom System 100 als gleichwertig behandelt werden. Das erleichtert die Zugriffskontrolle, da die Anfrage eines Nutzers N₁ bis Nᵢ für ein Zugriffsrecht auf ein Objekt O₁ bis Oₜ mit einer einzigen logischen Abfrage geklärt werden kann und nicht mit einer Reihe von Abfragen, wie sie bei hierarchischen Organisationsstrukturen notwendig sind. Zudem können Änderungen im System 100, in den Verwaltungsstrukturen oder Zugriffsprofilen mit einfachen Mitteln in die Regelsätze 140, 150 und 160 übernommen werden. Dazu müssen keine zusätzlichen Organisationsstrukturen aufgebaut oder mit älteren Strukturen in Übereinstimmung gebracht werden.

Der Betrieb des Systems 100 mit dem vorgeschlagenen Verfahren ermöglicht zudem die Verwaltung von Zugriffsrechten auf eine große Anzahl an Objekten, da die Zugriffskontrolle auf der Ebene der Gruppenzugehörigkeit erfolgt und nicht auf Objektebene.

Insbesondere kann die Zuweisung der Objekte O₁ bis Oₜ zu den Objektgruppen dynamisch erfolgen, z.B. anhand einer zeitlich veränderlichen Eigenschaft der Objekte O₁ bis Oₜ. Nach dem *"need-to-know"*-Prinzip können Nutzer N₁ bis Nᵢ deshalb nur auf Objekte O₁ bis Oₜ mit bestimmten Eigenschaften zugreifen. Dies vereinfacht die Verwaltung der Objekte O₁ bis Oₜ zusätzlich, da die Objektgruppenverwaltung 130 Zugriffsrechte nur an die Objekte O₁ bis Oₜ weiterleitet, die in der entsprechenden Gruppe organisiert sind. Außerdem wird das System 100 dadurch sicherer, da Objekte O₁ bis Oₜ, die bestimmte Eigenschaften nicht erfüllen, für Nutzer N₁ bis Nᵢ nicht sichtbar und damit auch nicht angreifbar sind.

Als Beispiel für ein vernetztes System 100 kann die Zugriffskontrolle auf die Geräte und Komponenten eines Fernwärmeversorgungssystems betrachtet werden, mit folgenden beispielhaften Spezifikationen:
- Spezifikation der dynamischen Gerätegruppe G: "Ein Regler, der sich in einem Fehlerzustand befindet und dessen Außentemperatursensor einen Wert < 10 °C anzeigt."
- Spezifikation der Nutzergruppe N: "Ein Hausmeister in Berlin."
- Spezifikation der Zuordnung: "Alle Mitglieder in der Nutzergruppe N dürfen das Anlagenschema der Geräte aus der dynamischen Gerätegruppe G lesend einsehen."

Die Gruppe G kann keine Geräte enthalten, ein Gerät oder eine Vielzahl von Geräten. Die Mitglieder von N sehen nur die Geräte, mit denen es ein Problem gibt. Wird das Problem behoben, verschwinden die Geräte aus der Gruppe G.

Die Eigenschaften zur Bildung der Gerätegruppen können z.B. sein:
- Geräteinformationen (z.B. Name, Adresse, Ansprechpartner oder weitere Meta-Infos),
- Gerätetypen (z.B. Regler, Pumpe, Zähler, Stellantrieb, Mess- oder Kontrollstation),
- Geräteinformationen einer evtl. vorhandenen Webanwendung (z.B. Gruppen, Tags, Anzahl definierter Alarme) oder
- Gerätedaten (alle vom Gerät übermittelten Messwerte).

Zahlenwerte können jeweils auch in statistischen Funktionen (min, max, avg, mean, top10, ...) und mit zeitlichem Bezug (heute, gestern, letzter Monat, ...) verwendet werden.

Es können auch mehrere Bedingungen bzgl. der Eigenschaften der Geräte verknüpft werden. Ein Gerät ist in der Gruppe, z.B. wenn alle Bedingungen erfüllt sind. Beliebige Boolsche Ausdrücke sind denkbar zur Formulierung der Regeln, ebenso wie Fuzzy Logic Entscheidungen und neuronale Netze zur Entscheidung über die Gruppierung.

Die Spezifikation der bereits erwähnten Gerätegruppe G kann auch folgendermaßen aussehen:
- "Freigabe aller Heizungsregler mit einem Fehler an die entsprechenden Techniker."
- "(Nur lesende) Freigabe aller Wärmemengenzähler in Gebäuden des Senats an Mitarbeiter des Senats."
- "Nur lesende Freigabe der Geräteposition von Wärmemengenzählern, die keinen Durchfluss-Messwert liefern, an die zentrale Warte der X."
- "Freigabe der Top-10 Abnehmer im letzten Jahr am Versorgungsstrang Y an den Vertrieb des Unternehmens Z."
- "Freigabe aller Geräte mit dem Label / Flag / Tag "Problem" an Techniker." (Mit Hilfe solcher Flags kann ein Callcenter Anlagen kennzeichnen.)
- "Freigabe aller Geräte, deren Name mit 0815 beginnt, an den Kunden mit der Kundennummer 0815."
- "Freigabe aller Geräte mit (veralteter) Firmware Version < 1.35 an den Kundendienst, um ein Update vorzubereiten."
- "Freigabe aller Geräte im Gebiet X, die im letzten Jahr weniger als Y kWh verbraucht haben, an den Vertrieb."
Weitere Beispiele aus dem allgemeinen IT-Umfeld sind:
- "Freigabe aller .JPG Dateien, die größer sind als 100 Mbyte, an den Praktikanten."
- "Nur lesende Freigabe aller Word-Dokumente in einem bestimmten Verzeichnis, die älter sind als 2 Jahre." (Dürfen beispielsweise aus Compliance-Gründen nicht mehr geändert werden.)

### Figur 2

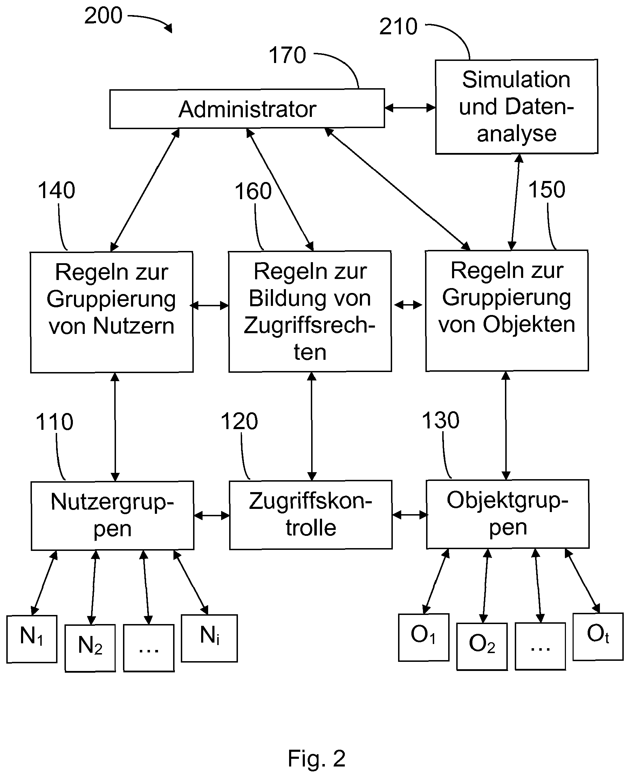

Fig. 2 zeigt ein vernetztes System mit Datenverarbeitung 200, bei dem der Administrator beim Erstellen der Regelsätze 140, 150 und 160 Ergebnisse von Simulationen und Datenanalysen 210 einbeziehen kann. In einer bevorzugten Ausführungsform können diese Ergebnisse direkt in den Regelsatz 160 einfließen. Auf diese Weise können zum Beispiel Ergebnisse, die mithilfe von digitale Zwillingen der Objekte O₁ bis Oₜ oder mithilfe von Aufzeichnungen zu den Eigenschaften der Objekte O₁ bis Oₜ oder vergleichbarer Objekte gewonnen wurden, genutzt werden, um das Verhalten der Objekte O₁ bis Oₜ vorherzusagen und ggf. ein Objekt O₁ bis Oₜ (oder mehrere Objekte) einer Objektgruppe zuzuordnen, ohne dass dieses Objekt O₁ bis Oₜ die dafür notwendigen Bedingungen erfüllt. Dies kann z.B. zur Planung von Wartungszyklen eingesetzt werden. Es ist auch denkbar, das System einem virtuellen Stresstest zu unterziehen und die Ergebnisse des Tests in die Zugriffskontrolle einfließen zu lassen.

### Figur 3

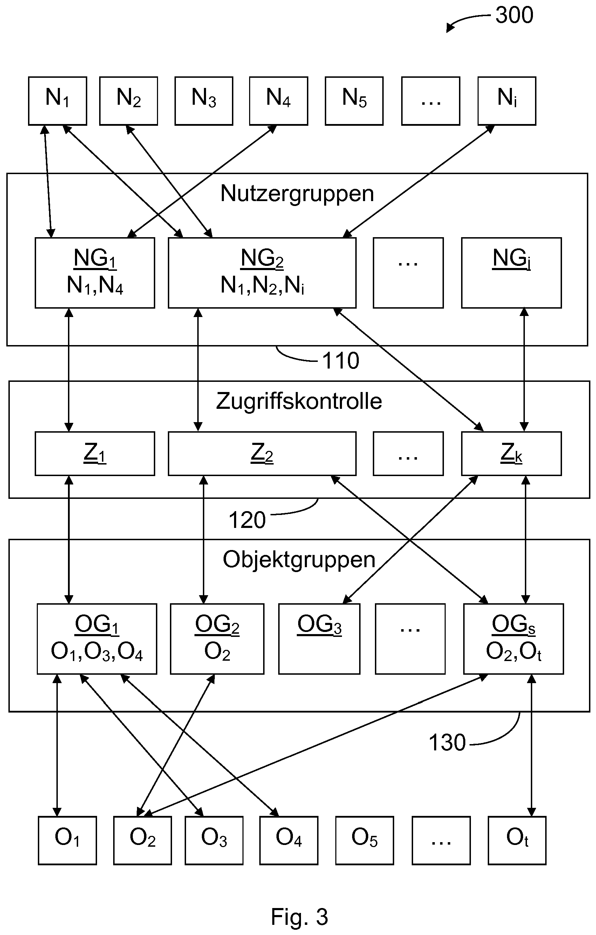

Fig. 3 zeigt weitere Details des operativen Teils eines vernetzten Systems mit Datenverarbeitung 100 bzw. 200, der sich aus den Nutzern N₁ bis Nᵢ, der Nutzergruppenverwaltung 110, der Zugriffsrechteverwaltung 120, der Objektgruppenverwaltung 130 und den Objekten O₁ bis Oₜ zusammensetzt. Dabei sind die Nutzer N₁ bis Nᵢ den Nutzergruppen NG₁ bis NGⱼ gemäß den eingezeichneten Verbindungen zugeordnet (wobei j eine natürliche Zahl darstellt). Ähnliches gilt für die Objekte O₁ bis Oₜ, die ihrem gegenwärtigen Zustand entsprechend den Objektgruppen OG₁ bis OGₛ in der gezeigten Art und Weise zugeordnet sind (wobei s eine natürliche Zahl darstellt). Die Zugriffsrechteverwaltung 120 verwaltet die Zugriffsrechte Z₁ bis Zₖ, die mithilfe der Regeln 160 gebildet werden (wobei k eine natürliche Zahl darstellt). Im dargestellten Beispiel gehören z.B. die Nutzer N₁ und N₄ der Nutzergruppe NG₁ an. Ihnen kann von der Zugriffsrechteverwaltung 120 das Zugriffsrecht Z₁ auf die Objekte O₁, O₃ und O₄ in der Objektgruppe OG₁ gewährt werden. Das Zugriffsrecht Z₂ ist für den Nutzer N₄ nicht zugänglich.

Die Gruppen können mehrere Nutzer N₁ bis Nᵢ oder Objekte O₁ bis Oₜ, einen Nutzer N₁ bis Nᵢ oder ein Objekt O₁ bis Oₜ oder auch keinen der Nutzer N₁ bis Nᵢ bzw. keines der Objekte O₁ bis Oₜ enthalten. Mehrere Nutzergruppen können zudem auf ein Zugriffsrecht Z₁ bis Zₖ zugreifen bzw. eine Mehrzahl von Zugriffsrechten Z₁ bis Zₖ auf eine Objektgruppe OG₁ bis OGₛ gerichtet sein. Des Weiteren können einer Nutzergruppe NG₁ bis NGⱼ mehrere Zugriffsrechte Z₁ bis Zₖ zur Verfügung stehen bzw. ein Zugriffsrecht auf eine Mehrzahl von Objektgruppen OG₁ bis OGₛ gerichtet sein. Dabei gibt es auch Verweise von und zu leeren Gruppen, d.h. Gruppen, denen nach dem aktuellen Zustand des Systems keine Mitglieder zugeordnet werden.

### Glossar

### Echtzeit

Der Betrieb informationstechnischer Systeme erfolgt in Echtzeit (englisch *real-time*), wenn Programme zur Verarbeitung anfallender Daten ständig betriebsbereit sind und die Verarbeitungsergebnisse dieser Programme (nahezu) simultan verfügbar sind, d.h. innerhalb einer vorgegebenen Zeitspanne und ohne Verzögerungen, die über systembedingte Bearbeitungszeiten hinausgehen. Die Daten können dabei je nach Anwendungsfall nach einer zeitlich zufälligen Verteilung oder zu vorherbestimmten Zeitpunkten anfallen. Je nach Anwendung und System kann die vorgegebene Zeitspanne z.B. wenige Mikro- oder Millisekunden, Minuten oder Stunden betragen.

### Eigenschaft eines Objekts

Eine Eigenschaft eines Objekts, das zu einem vernetzten System mit Datenverarbeitung gehört, kann eine statische Information über das Objekt wie Name, Besitzer, Standort oder Typ oder eine zeitlich veränderliche Information wie eine Größen-, Druck-, Temperatur- oder Füllstandsangabe sein. Diese Informationen, Daten oder Eigenschaften können in einem zentralen Server oder Datenträger des Systems gespeichert werden, in dezentralen Strukturen des Systems vorliegen, vom Objekt übermittelt werden und/oder von einer Webanwendung zur Verfügung gestellt werden.

### Nutzer

Ein Nutzer eines Systems mit Datenverarbeitung ist eine natürliche Person, ein Anwendungsprogramm, ein Dienst, ein Computersystem, eine Hard- oder Softwarekomponente oder ein Gerät, das mit dem System verbunden ist. Ein Nutzer kann sich in einem vernetzten System mit Datenverarbeitung authentifizieren oder eine Authentifizierung von einem anderen Nutzer erwerben. Nutzer können Zugriffsrechte auf Objekte eines vernetzten Systems mit Datenverarbeitung anfordern und die Objekte nutzen, um eine bestimmte Aufgabe zu lösen.

### Nutzergruppe

Eine Nutzergruppe wird aus der Menge der Nutzer eines vernetzten Systems mit Datenverarbeitung anhand einer Regel gebildet. Diese Regel stellt eine logische Abfrage einer Nutzergruppenverwaltung dar, die anhand des Ergebnisses dieser Abfrage Nutzer einer Nutzergruppe zuweist. Eine Nutzergruppe kann mehrere Nutzer, einen Nutzer oder keinen Nutzer enthalten.

### Objekt

Ein Objekt ist ein Anwendungsprogramm, ein Dienst, ein Gerät, eine Datei, ein Datenobjekt, eine Aufzeichnung, ein Computersystem, eine Hard- oder Softwarekomponente eines vernetzten Systems mit Datenverarbeitung. Ein Objekt steht den Nutzern eines vernetzten Systems mit Datenverarbeitung zur Bewältigung einer Aufgabe oder einer Mehrzahl von Aufgaben zur Verfügung, z.B. um Informationen, Daten oder bestimmte Funktionalitäten bereitzustellen. Nutzer können Zugriffsrechte auf Objekte eines vernetzten Systems mit Datenverarbeitung zur Lösung einer Aufgabe anfordern.

### Objektgruppe

Eine Objektgruppe wird aus der Menge der Objekte eines vernetzten Systems mit Datenverarbeitung anhand einer Regel gebildet. Diese Regel stellt eine logische Abfrage einer Objektgruppenverwaltung dar, die anhand des Ergebnisses dieser Abfrage Objekte einer Objektgruppe zuweist. Eine Objektgruppe kann mehrere Objekte, ein Objekt oder kein Objekt enthalten.

### Regel

Eine Regel stellt typischerweise eine logische Abfrage dar. Regeln können in vernetzten Systemen mit Datenverarbeitung zur Unterteilung von Nutzern oder Objekten in Gruppen genutzt werden oder um Zugriffsrechte von Nutzern auf Objekte zu bilden. Die Regeln können beliebige Boolsche Ausdrücke sein, ebenso wie Fuzzy Logic Entscheidungen und neuronale Netze zur Entscheidung über die Gruppierung.

### Zeitlich veränderliche Eigenschaft

Eine zeitlich veränderliche Eigenschaft ist eine Eigenschaft eines Objekts eines vernetzten Systems mit Datenverarbeitung, die sich ohne einen externen Eingriff in das System ändern kann. Ein externer Eingriff kann zum Beispiel durch einen Systemadministrator oder einen Nutzer erfolgen, d.h. externe Eingriffe erfordern eine Eingabe oder eine Änderung eines Systemparameters, die das System nicht selbst bzw. autonom durchführen kann. Im Gegensatz dazu sind statische oder unveränderliche Eigenschaften dadurch gekennzeichnet, dass sie sich nicht ändern oder nur durch einen externen Eingriff in das System geändert werden können. Dazu gehören Eigenschaften, die beim Erstellen eines Objekts oder bei dessen Installation entstehen und sich nach dem Erstellen oder der Installation nicht mehr oder nur durch einen externen Eingriff in das System verändern können.

### Zugriffsrecht / Berechtigung

Ein Zugriffsrecht oder Berechtigung ermöglicht es einem Nutzer eines vernetzten Systems mit Datenverarbeitung auf Objekte des Systems zuzugreifen, um bestimmte Aktionen durchzuführen. Dazu gehören einfache Lese- oder Schreibzugriffe, das Ausführen von Programmen, eine Fernsteuerung von Objekten, insbesondere von Geräten oder Hardwarekomponenten, und weiterführende Zugriffe von einem ersten Objekt auf ein zweites Objekt.

### Bezugszeichen

- 100: Vernetztes System mit Datenverarbeitung
- 110: Nutzergruppenverwaltung
- 120: Zugriffsrechteverwaltung
- 130: Objektgruppenverwaltung
- 140: Regeln zur Bildung von Nutzergruppen
- 150: Regeln zur Bildung von Objektgruppen
- 160: Regeln zur Bildung von Zugriffsrechten
- 170: Administrator
- Nₐ: Nutzer des Systems 100, wobei a ∈ {1, 2, ... i}
- Oₐ: Objekt des Systems 100, wobei a ∈ {1, 2, ... t}

- 200: Vernetztes System mit Datenverarbeitung, bei dem Simulationsergebnisse und Datenanalysen zur Verwaltung von Zugriffsrechten genutzt werden
- 210: Computersystem zur Simulation und Datenanalyse

- 300: Schematische Darstellung der Zugriffskontrolle in einem vernetzten System mit Datenverarbeitung 100 oder 200
- NGₐ: Nutzergruppe, wobei a ∈ {1, 2, ... j}
- OGₐ: Objektgruppe, wobei a ∈ {1, 2, ... s}
- Zₐ: Zugriffsrecht, wobei a ∈ {1, 2, ... k}

### zitierte Literatur

### zitierte Patentliteratur

WO 02/097591 A2
US 8,458,337 B2
US 2012/0137213 A1
US 8,032,558 B2
US 2008/0127354 A1
US 2013/0332984 A1
WO 2015/092341 A1
WO 2012/151132 A1
WO 2004/001555 A2
US 2011/0167479 A1
WO 2013/048154 A2
WO 2015/047338 A1
WO 2017/095741 A1
US 2018/204022 A1
DE 10 2004 004 101 A1

## Patentansprüche

1. Verfahren zur Kontrolle von Zugriffsrechten (Z₁, ..., Zₖ) von mindestens einem Nutzer (N₁, ..., Nᵢ) auf Objekte (O₁, ..., Oₜ) in einem vernetzten System mit Datenverarbeitung (100; 200);
1.1 wobei die Kontrolle der Zugriffsrechte (Z₁, ..., Zₖ) rechnergestützt erfolgt;
1.2 wobei dem mindestens einen Nutzer (N₁, ..., Nᵢ) mindestens ein Zugriffsrecht (Z₁, ..., Zₖ) auf mindestens eines der Objekte (O₁, ..., Oₜ) gewährt oder verweigert wird;
1.3 wobei die Objekte (O₁, ..., Oₜ) in mindestens eine Objektgruppe (OG₁, ..., OGₛ) unterteilt werden;
1.4 wobei die Zugehörigkeit der Objekte (O₁, ..., Oₜ) zu der mindestens einen Objektgruppe (OG₁, ..., OGₛ) genutzt wird, um zu entscheiden, ob dem mindestens einen Nutzer (N₁, ..., Nᵢ) das mindestens eine Zugriffsrecht (Z₁, ..., Zₖ) auf mindestens eines der Objekte (O₁, ..., Oₜ) gewährt oder verweigert wird;
1.5 wobei die Unterteilung der Objekte (O₁, ..., Oₜ) in die mindestens eine Objektgruppe (OG₁, ..., OGₛ) mithilfe mindestens einer Regel (150) erfolgt;
1.5.1 **dadurch gekennzeichnet, dass** die mindestens eine Regel eine logische Abfrage darstellt, die von dem vernetzten System mit Datenverarbeitung zur Unterteilung der Objekte in Gruppen genutzt wird;
1.6 wobei die mindestens eine Regel (150) sich auf mindestens eine Eigenschaft der Objekte (O₁, ..., Oₜ) bezieht;
1.7 wobei die für die Gruppierung genutzte mindestens eine Eigenschaft der Objekte (O₁, ..., Oₜ) eine zeitlich veränderliche Eigenschaft darstellt; und
1.8 wobei die mindestens eine Regel (150) auf Schwellwerten für die Eigenschaften der Objekte (O₁, ..., Oₜ) basiert.

2. Verfahren nach dem vorhergehenden Anspruch,
**dadurch gekennzeichnet,**
**dass** die mindestens eine Regel (150) zur Gruppierung der Objekte (O₁, ..., Oₜ) mithilfe von Simulationen und/oder datenanalytischen Methoden gewonnen werden.

3. Verfahren nach einem der vorhergehenden Ansprüche,
**dadurch gekennzeichnet,**
**dass** für die Gruppierung der Objekte zusätzlich mindestens eine statische Eigenschaft der Objekte genutzt wird.

4. Verfahren nach einem der vorhergehenden Ansprüche,
**dadurch gekennzeichnet,**
**dass** die Unterteilung der Objekte (O₁, ..., Oₜ) in die mindestens eine Objektgruppe (OG₁, ..., OGₛ) anhand des Wertes der mindestens einen Eigenschaft der Objekte (O₁, ..., Oₜ) erfolgt, der zuletzt vom Computersystem bestimmt und/oder gespeichert wurde.

5. Verfahren nach einem der vorhergehenden Ansprüche,
**dadurch gekennzeichnet,**
**dass** die Gruppierung der Objekte (O₁, ..., Oₜ) in die mindestens eine Objektgruppe (OG₁, ..., OGₛ) in einem zeitlich vorgegebenen Abstand überprüft und angepasst wird.

6. Verfahren nach einem der vorhergehenden Ansprüche,
**dadurch gekennzeichnet,**
**dass** die Gruppierung der Objekte (O1, ..., Ot) in die mindestens eine Objektgruppe (OG1, ..., OGs) mit einer zeitlichen Dämpfung oder künstlichen Hysterese erfolgt.

7. Verfahren nach einem der vorhergehenden Ansprüche,
**dadurch gekennzeichnet,**
**dass** die Zuordnung eines Objekts (O₁, ..., Oₜ) zu einer Objektgruppe (OG₁, ..., OGₛ) neu bewertet wird, wenn sich die mindestens eine Eigenschaft des Objekts (O₁, ..., Oₜ) um einen vorgegebenen Wert verändert hat.

8. Verfahren nach dem unmittelbar vorhergehenden Anspruch,
**dadurch gekennzeichnet,**
**dass** der vorgegebene Wert eine relative und/oder prozentuale Veränderung der mindestens einen Eigenschaft der Objekte (O₁, ..., Oₜ) angibt.

9. Verfahren nach einem der vorhergehenden Ansprüche,
**dadurch gekennzeichnet,**
9.1 dass eine Mehrzahl von Nutzern (N₁, ..., Nᵢ) mindestens ein Zugriffsrecht (Z₁, ..., Zₖ) auf mindestens eines der Objekte (O₁, ..., Oₜ) benötigt;
9.2 dass die Nutzer (N₁, ..., Nᵢ) in eine Mehrzahl von Nutzergruppen (NG₁, ..., NGⱼ) unterteilt werden;
9.3 dass die Unterteilung der Nutzer (N₁, ..., Nᵢ) in die Nutzergruppen (NG₁, ..., NGⱼ) mithilfe mindestens einer Regel (150) erfolgt;
9.4 dass die mindestens eine Regel (150) sich auf mindestens eine Eigenschaft der Nutzer (N₁, ..., Nᵢ) bezieht;
9.5 dass die Zugehörigkeit eines Nutzers (N₁, ..., Nᵢ) zu einer Nutzergruppe (NG₁, ..., NGⱼ) genutzt wird, um zu entscheiden, ob diesem Nutzer (N₁, ..., Nᵢ) das mindestens eine Zugriffsrecht (Z₁, ..., Zₖ) auf mindestens eines der Objekte (O₁, ..., Oₜ) gewährt oder verweigert wird.

10. Vernetztes System mit Datenverarbeitung (100; 200)
10.1 mit einer Mehrzahl von Objekten (O₁, ..., Ot);
10.2 mit einer mit den Objekten gekoppelten Steuerung, die mindestens einem Nutzer (N₁, ..., Nᵢ) mindestens ein Zugriffsrecht (Z₁, ..., Zₖ) auf mindestens eines der Objekte (O₁, ..., Oₜ) des vernetzten Systems gewähren oder verweigern kann;
10.3 wobei die Steuerung Mittel aufweist, mittels derer die Objekte (O₁, ..., Oₜ) in mindestens eine Objektgruppe (OG₁, ..., OGₛ) unterteilt werden können;
10.4 wobei die Steuerung Mittel aufweist, mittels derer die Zugehörigkeit der Objekte (O₁, ..., Oₜ) zu der mindestens einen Objektgruppe (OG₁, ..., OGₛ) genutzt werden kann, um zu entscheiden, ob dem mindestens einen Nutzer (N₁, ..., Nᵢ) das mindestens eine Zugriffsrecht (Z₁, ..., Zₖ) auf mindestens eines der Objekte (O₁, ..., Oₜ) gewährt oder verweigert wird;
10.5 wobei die Steuerung Mittel aufweist, mittels derer die Unterteilung der Objekte (O₁,..., Oₜ) in die mindestens eine Objektgruppe (OG₁, ..., OGₛ) mithilfe mindestens einer Regel (150) erfolgen kann;
10.5.1 **dadurch gekennzeichnet, dass** die mindestens eine Regel eine logische Abfrage darstellt, die von dem vernetzten System mit Datenverarbeitung zur Unterteilung der Objekte in Gruppen genutzt wird;
10.6 wobei die mindestens eine Regel (150) sich auf mindestens eine Eigenschaft der Objekte (O₁, ..., Ot) bezieht;
10.7 wobei die für die Gruppierung genutzte mindestens eine Eigenschaft der Objekte (O₁, ..., Oₜ) eine zeitlich veränderliche Eigenschaft darstellt; und
10.8 wobei die mindestens eine Regel (150) auf Schwellwerten für die Eigenschaften der Objekte (O₁, ..., Oₜ) basiert.

11. Computerprogramm, umfassend Befehle, die bewirken, dass die Steuerung des Anspruchs 10 die Verfahrensschritte nach einem der Ansprüche 1 bis 9 ausführt.

12. Datenträger, auf dem das Computerprogramm nach Anspruch 11 gespeichert ist.

## Claims

1. Method for controlling access rights (Z₁, ..., Zₖ) of at least one user (N₁, ..., Nᵢ) to objects (O₁, ..., Oₜ) in a networked system with data processing (100; 200);
1.1 controlling the access rights (Z₁, ..., Zₖ) being computer-aided;
1.2 the at least one user (N₁, ..., Nᵢ) being granted or denied at least one access right (Z₁, .... Zₖ) to at least one of the objects (O₁, ..., Oₜ);
1.3 the objects (O₁, ..., Oₜ) being subdivided into at least one object group (OG₁, ..., OGₛ);
1.4 the membership of the objects (O₁, ..., Oₜ) to the at least one object group (OG₁, ..., OGₛ) being used to decide whether the at least one user (N₁, ..., Nᵢ) is granted or denied the at least one access right (Z₁, ..., Zₖ) to at least one of the objects (O₁, ..., Ot);
1.5 the objects (O₁, ..., Oₜ)being subdivided into the at least one object group (OG₁, ..., OGₛ) using at least one rule (150);
1.5.1 **characterized in that** the at least one rule represents a logical query used by the networked system with data processing to subdivide the objects into groups;
1.6 the at least one rule (150) relating to at least one property of the objects (O₁, ..., Ot);
1.7 the at least one property of the objects (O₁, ..., Oₜ) used for the grouping being a time-varying property; and
1.8 the at least one rule (150) being based on threshold values for the properties of the objects (O₁, ..., Oₜ).

2. Method according to the preceding claim,
**characterized in that**
the at least one rule (150) for grouping the objects (O₁, ..., Oₜ) is obtained using simulations and/or data analysis methods.

3. Method according to either of the preceding claims,
**characterized in that**
at least one static property of the objects is also used for grouping the objects.

4. Method according to any of the preceding claims,
**characterized in that**
the objects (O₁, ..., Oₜ) are subdivided into the at least one object group (OG₁, ..., OGₛ) on the basis of the value of the at least one property of the objects (O₁, ..., Oₜ) that was last determined and/or stored by the computer system.

5. Method according to any of the preceding claims,
**characterized in that**
the grouping of the objects (O₁, ..., Oₜ) into the at least one object group (OG₁, ..., OGₛ) is reviewed and adjusted at a specified interval.

6. Method according to any of the preceding claims,
**characterized in that**
the objects (O₁, ..., Oₜ) are grouped into the at least one object group (OG1, ..., OGs) with a temporal damping or artificial hysteresis.

7. Method according to any of the preceding claims,
**characterized in that**
the assignment of an object (O₁, ..., Oₜ) to an object group (OG₁, ..., OGₛ) is re-evaluated if the at least one property of the object (O₁, ..., Oₜ) has changed by a specified value.

8. Method according to the immediately preceding claim,
**characterized in that**
the specified value indicates a relative and/or percentage change in the at least one property of the objects (O₁, ..., Oₜ).

9. Method according to any of the preceding claims,
**characterized in that**
9.1 a plurality of users (N₁, ..., Nᵢ) require at least one access right (Z₁, ..., Zₖ) to at least one of the objects (O₁, ..., Oₜ);
9.2 **in that** the users (N₁, ..., Nᵢ) are subdivided into a plurality of user groups (NG₁, ..., NGⱼ);
9.3 **in that** the users (N₁, ..., Nᵢ) are subdivided into the user groups (NG₁, ..., NGⱼ) using at least one rule (150);
9.4 **in that** the at least one rule (150) relates to at least one property of the users (N₁, ..., Nᵢ);
9.5 **in that** the membership of a user (N₁, ..., Nᵢ) to a user group (NG₁, ..., NGⱼ) is used to decide whether this user (N₁, ..., Nᵢ) is granted or denied the at least one access right (Z₁, ..., Zₖ) to at least one of the objects (O₁, ..., Ot).

10. Networked system with data processing (100; 200)
10.1 comprising a plurality of objects (O₁, ..., Ot);
10.2 comprising a controller coupled to the objects, which controller can grant or deny at least one user (N₁, ..., Nᵢ) at least one access right (Z₁, ..., Zₖ) to at least one of the objects (O₁, ..., Oₜ) of the networked system;
10.3 the controller having means by means of which the objects (O₁, ..., Oₜ) can be subdivided into at least one object group (OG₁, ..., OGₛ);
10.4 the controller having means by means of which the membership of the objects (O₁, ..., Oₜ) to the at least one object group (OG₁, ..., OGₛ) can be used to decide whether the at least one user (N₁, ..., Nᵢ) is granted or denied the at least one access right (Z₁, ..., Zₖ) to at least one of the objects (O₁, ..., Ot);
10.5 the controller having means by means of which the objects (O₁, ..., Oₜ) can be subdivided into the at least one object group (OG₁, ..., OGₛ) using at least one rule (150);
10.5.1 **characterized in that** the at least one rule represents a logical query used by the networked system with data processing to subdivide the objects into groups;
10.6 the at least one rule (150) relating to at least one property of the objects (O₁, ..., Oₜ);
10.7 the at least one property of the objects (O₁, ..., Oₜ) used for the grouping being a time-varying property; and
10.8 the at least one rule (150) being based on threshold values for the properties of the objects (O₁, ..., Oₜ).

11. Computer program comprising instructions causing the controller of claim 10 to carry out the method steps according to any of claims 1 to 9.

12. Data carrier on which the computer program according to claim 11 is stored.

## Revendications

1. Procédé permettant le contrôle de droits d'accès (Z₁, ..., Zₖ) d'au moins un utilisateur (N₁, ..., Nᵢ) à des objets (O₁, ..., Oₜ) dans un système en réseau avec traitement de données (100 ; 200) ;
1.1 dans lequel le contrôle des droits d'accès (Z₁, ..., Zₖ) est effectué par ordinateur ;
1.2 dans lequel au moins un droit d'accès (Z₁, ..., Zₖ) à au moins l'un des objets (O₁, ..., Oₜ) est accordé ou refusé à l'au moins un utilisateur (N₁, ..., Nᵢ) ;
1.3 dans lequel les objets (O₁, ..., Oₜ) sont répartis en au moins un groupe d'objets (OG₁, ..., OGₛ) ;
1.4 dans lequel l'appartenance des objets (O₁, ..., Oₜ) à l'au moins un groupe d'objets (OG₁, ..., OGₛ) est utilisée pour déterminer si l'au moins un droit d'accès (Z₁, ..., Zₖ) à au moins l'un des objets (O₁, ..., Oₜ) est accordé ou refusé à l'au moins un utilisateur (N₁, ..., Nᵢ) ;
1.5 dans lequel la répartition des objets (O₁, ..., Oₜ) en l'au moins un groupe d'objets (OG₁, ..., OGₛ) est effectuée à l'aide d'au moins une règle (150) ;
1.5.1 **caractérisé en ce que** l'au moins une règle représente une requête logique utilisée par le système en réseau avec traitement de données pour la répartition des objets en groupes ;
1.6 dans lequel l'au moins une règle (150) se rapporte à au moins une propriété des objets (O₁, ..., Oₜ) ;
1.7 dans lequel l'au moins une propriété des objets (O₁, ..., Oₜ) utilisée pour le regroupement est une propriété variable dans le temps ; et
1.8 dans lequel l'au moins une règle (150) est basée sur des valeurs de seuil pour les propriétés des objets (O₁, ..., Oₜ).

2. Procédé selon la revendication précédente,
**caractérisé en ce**
**que** l'au moins une règle (150) pour le regroupement des objets (O₁, ..., Oₜ) est obtenue à l'aide de simulations et/ou de méthodes d'analyse de données.

3. Procédé selon l'une des revendications précédentes,
**caractérisé en ce**
**que,** pour le regroupement des objets, au moins une propriété statique des objets est en outre utilisée.

4. Procédé selon l'une des revendications précédentes,
**caractérisé en ce**
**que** la répartition des objets (O₁, ..., Oₜ) en l'au moins un groupe d'objets (OG₁, ..., OGₛ) est effectuée à l'aide de la valeur de l'au moins une propriété des objets (O₁, ..., Oₜ) qui a été déterminée et/ou enregistrée en dernier lieu par le système informatique.

5. Procédé selon l'une des revendications précédentes,
**caractérisé en ce**
**que** le regroupement des objets (O₁, ..., Oₜ) dans l'au moins un groupe d'objets (OG₁, ..., OGₛ) est vérifié et ajusté dans un intervalle de temps prédéfini.

6. Procédé selon l'une des revendications précédentes,
**caractérisé en ce**
**que** le regroupement des objets (O₁, ..., Oₜ) dans l'au moins un groupe d'objets (OG₁, ..., OGₛ) est effectué avec un amortissement temporel ou une hystérésis artificielle.

7. Procédé selon l'une des revendications précédentes,
**caractérisé en ce**
**que** l'affectation d'un objet (O₁, ..., Oₜ) à un groupe d'objets (OG₁, ..., OGₛ) est réévaluée lorsque l'au moins une propriété de l'objet (O₁, ..., Oₜ) a changé d'une valeur prédéfinie.

8. Procédé selon la revendication immédiatement précédente,
**caractérisé en ce**
**que** la valeur prédéfinie indique une modification relative et/ou en pourcentage de l'au moins une propriété des objets (O₁, ..., Ot).

9. Procédé selon l'une des revendications précédentes,
**caractérisé en ce**
9.1 **qu'**une pluralité d'utilisateurs (N₁, ..., Nᵢ) a besoin d'au moins un droit d'accès (Z₁, ..., Zₖ) à au moins l'un des objets (O₁, ..., Oₜ) ;
9.2 **en ce que** les utilisateurs (N₁, ..., Nᵢ) sont répartis en une pluralité de groupes d'utilisateurs (NG₁, ..., NGⱼ) ;
9.3 **en ce que** la répartition des utilisateurs (N₁, ..., Nᵢ) dans les groupes d'utilisateurs (NG₁, ..., NGⱼ) est effectuée à l'aide d'au moins une règle (150) ;
9.4 **en ce que** l'au moins une règle (150) se rapporte à au moins une propriété des utilisateurs (N₁, ..., Nᵢ) ;
9.5 **en ce que** l'appartenance d'un utilisateur (N₁, ..., Nᵢ) à un groupe d'utilisateurs (NG₁, ..., NGⱼ) est utilisée pour déterminer si l'au moins un droit d'accès (Z₁, ..., Zₖ) à au moins l'un des objets (O₁, ..., Ot).est accordé ou refusé à cet utilisateur (N₁, ..., Nᵢ).

10. Système en réseau avec traitement des données (100 ; 200)
10.1 comportant une pluralité d'objets (O₁, ..., Oₜ) ;
10.2 comportant une commande couplée aux objets, laquelle peut accorder ou refuser, à au moins un utilisateur (N₁, ..., Nⱼ), au moins un droit d'accès (Z₁, ..., Zₖ) à au moins l'un des objets (O₁, ..., Oₜ) du système en réseau ;
10.3 dans lequel la commande présente des moyens par le biais desquels les objets (O₁, ..., Oₜ) peuvent être répartis en au moins un groupe d'objets (OG₁, ..., OGₛ) ;
10.4 dans lequel la commande présente des moyens par le biais desquels l'appartenance des objets (O₁, ..., Oₜ) à l'au moins un groupe d'objets (OG₁, ..., OGₛ) peut être utilisée pour déterminer si l'au moins un droit d'accès (Z₁, ..., Zₖ) à au moins l'un des objets (O₁, ..., Oₜ) est accordé ou refusé à l'au moins un utilisateur (N₁, ..., Nᵢ) ;
10.5 dans lequel la commande présente des moyens par le biais desquels la répartition des objets (O₁, ..., Oₜ) en l'au moins un groupe d'objets (OG₁, ..., OGₛ) peut être effectuée à l'aide d'au moins une règle (150) ;
10.5.1 **caractérisé en ce que** l'au moins une règle représente une requête logique utilisée par le système en réseau avec traitement de données pour la répartition des objets en groupes ;
10.6 dans lequel l'au moins une règle (150) se rapporte à au moins une propriété des objets (O₁, ..., Oₜ) ;
10.7 dans lequel l'au moins une propriété des objets (O₁, ..., Oₜ) utilisée pour le regroupement est une propriété variable dans le temps ; et
10.8 dans lequel l'au moins une règle (150) est basée sur des valeurs de seuil pour les propriétés des objets (O₁, ..., Oₜ).

11. Programme informatique comprenant des instructions qui amènent la commande selon la revendication 10 à exécuter les étapes de procédé selon l'une des revendications 1 à 9.

12. Support de données sur lequel est enregistré le programme informatique selon la revendication 11.
